Europäisches Patentamt

European Patent Office

Office européen des brevets

(19)

(11) Veröffentlichungsnummer: **0 202 644**
**B1**

(12) EUROPÄISCHE PATENTSCHRIFT

(45) Veröffentlichungstag der Patentschrift:
18.07.90

(21) Anmeldenummer: 86106804.7

(22) Anmeldetag: 20.05.86

(51) Int. Cl.⁵: **F16G 13/07**

(54) **Gelenkkette.**

(30) Priorität: 21.05.85 DE 3518160

(43) Veröffentlichungstag der Anmeldung:
26.11.86 Patentblatt 86/48

(45) Bekanntmachung des Hinweises auf die Patenterteilung:
18.07.90 Patentblatt 90/29

(84) Benannte Vertragsstaaten:
AT BE CH DE FR GB IT LI LU NL SE

(56) Entgegenhaltungen:
FR-A- 1 270 041
US-A- 3 191 376
US-A- 3 522 743

(73) Patentinhaber: Allert, Kurt, Panoramaweg 3,
D-7238 Oberndorf/Neckar(DE)

(72) Erfinder: Allert, Kurt, Panoramaweg 3,
D-7238 Oberndorf/Neckar(DE)

(74) Vertreter: König, Oskar, Dr.-Ing. Dipl.-Phys.,
Klüpfelstrasse 6 Postfach 10 27 33,
D-7000 Stuttgart 1(DE)

## Beschreibung

Die Erfindung betrifft eine Gelenkkette gemäß den Oberbegriffen der Ansprüche 1, 2 und 3.

Bekannte Gelenkketten sind als Laschenketten, wie Gall-Ketten, Flyer-Ketten, Hülsenketten und Rollenketten ausgebildet (LUEGER, "Lexikon der Technik", 4. Auflage, Bd. 1 "Grundlagen des Maschinenbaus", 1960, S. 237/238). Solche Laschenketten weisen jedoch verhältnismäßig komplizierte Bauart auf und sind entsprechend kostenaufwendig. Auch lassen sie sich seitlich nur sehr wenig auslenken, so daß sie sich bspw. nicht für dreidimensionalen Lauf eignen; u.a. auch nicht für Anordnung an Kettentrommeln, die Ketten schraubenlinienförmig aufwinden sollen. Auch ist die Seitenführung von Laschenketten auf den Kettenrädern nicht besonders gut.

Bei einer bekannten Gelenkkette der im Oberbegriff der Ansprüche 1, 2 und 3 genannten Art (US-A 3 191 376) ist das einzelne Kettenglied durch Gießen einstückig hergestellt. Es weist an seinem einen Längsendbereich einen im wesentlichen kreiszylindrischen Quersteg auf, der als Lagerlöcher dienende Sackbohrungen aufweist. Von diesem Quersteg streben zwei gekröpfte Arme ab, die je einen Lagerzapfen aufweisen. Diese Lagerzapfen werden bei der Herstellung der Gelenkkette durch entsprechendes plastisches Einwärtsbiegen der ursprünglich gespreizt gegossenen Arme in die zugeordneten Lagerlöcher des benachbarten Kettengliedes eingesetzt. Die Herstellung dieser Gelenkkette ist schwierig und kostenaufwendig.

Es ist Aufgabe der Erfindung, eine Gelenkkette zu schaffen, die eine einfache Bauart aufweist und sich für kostengünstige Herstellung aus Metall eignet.

Diese Aufgabe wird erfindungsgemäß durch Gelenkketten gemäß den Ansprüchen 1, 2 und 3 gelöst.

Diese Gelenkketten weisen äußerst einfache, kostengünstige Bauarten auf. Bei der Gelenkkette nach Anspruch 1 besteht jedes Kettenglied aus einem äußerst kostengünstigen und baulich einfachen, einstückigen Stanz- und Biegeteil aus Blech. Bei den Gelenkketten nach den Ansprüchen 2 und 3 bildet jeweils ein einstückiges Stanz- und Biegeteil aus Blech den Hauptkörper des jeweiligen Kettengliedes, an den dann nur noch gesonderte Lagerzapfen und/oder gesonderte Lagerbuchsen bzw. eine Rolle angesetzt sind, so daß auch diese Gelenkketten baulich einfach und äußerst kostengünstig herstellbar sind.

Die Stanz- und Biegeteile der Kettenglieder bestehen aus Blech, also aus Metall. Auch wenn das Kettenglied mehrteilig ist, kann es ganz aus Metall oder ggfs. teilweise auch aus Nichtmetallen, bspw. Kunststoff bestehen. Die Kettenglieder können bspw. aus Stahl bestehen, der ungehärtet ist oder, falls erwünscht, auch gehärtet oder sonstwie vergütet sein kann. Die Kettenglieder können jedoch auch aus anderen geeigneten Metallen hergestellt sein, bspw. aus Messing. Die Kettenglieder können starr oder elastisch und unter sich gleich oder ähnlich ausgebildet sein. Bevorzugt können die Kettenglieder unelastisch ausgebildet sein, da hierdurch höhere Festigkeiten der Kette erreicht werden. Der Zusammenbau der Kettenglieder zur Kette ist äußerst einfach vornehmbar. Diese Kette eignet sich auch zur vollautomatischen Herstellung.

Eine besonders einfache Bauart des Kettengliedes bzw. seines Hauptkörpers ergibt sich dadurch, daß das Kettenglied einen U-förmigen Bügel aufweist, dessen beiden Schenkel zusammen mit mit dem Bügel verbundenen Armen die Seitenwände bilden, wobei an den freien Endbereichen der Arme die Lagerzapfen angeordnet sind. Ferner kann bevorzugt vorgesehen sein, daß die beiden Lagerzapfen des Kettengliedes im Längsabstand voneinander enden, so daß sie, wie auch die Lagerlöcher des Kettengliedes zwischen sich Raum frei lassen, in den ein Kettenrad eingreifen kann. Der außen am Kettenglied befindliche Quersteg, der sich im Abstand von der durch die diesem Kettenglied zugeordneten beiden, zueinander parallelen Drehachsen dieses Kettengliedes bestimmten Ebene befindet, kämmt dann mit dem oder den Kettenrädern — falls solche bei der betreffenden Anwendung der Kette vorgesehen sind — und das Kettenrad kann in den bzw. durch den Zwischenraum zwischen den Lagerzapfen bzw. den sie tragenden Bereichen der Seitenwände hineinragen bzw. hindurchragen, was besonders gute Seitenführung der Gelenkkette auf dem Kettenrad ermöglicht, wie sie bspw. bei Laschenketten nicht erreichbar ist. Wenn, wie bevorzugt vorgesehen, die Querstege der Kettenglieder als in die Zahnlücken der Kettenräder eindringende Mitnehmer dienen, wird auch der Teilkreisdurchmesser der Gelenkkette bei gegebener Höhe seiner Kettenglieder vergrößert infolge der Anordnung jedes Quersteges im Abstand von der durch die ihm benachbarten beiden Drehachsen seines Kettengliedes bestimmten geometrischen Ebene. Diese Vergrößerung des Teilkreisdurchmessers ist äußerst vorteilhaft, u.a. deshalb, weil hierdurch die Gelenkkette bei gegebenem Teilkreisdurchmesser platzsparender angeordnet sein kann als Laschenketten. Die durch die Längsachsen der Lagerzapfen bestimmten Drehachsen der Kette haben dann auf einem Kettenrad von dessen Drehachse geringeren Abstand als die Querstege der Kettenglieder, wobei jedoch im Falle eines Zugmittelgetriebes die für seine Übersetzung maßgebenden Teilkreisdurchmesser durch die Lage der Querstege und nicht durch die Drehachsen der Lagerzapfen bestimmt werden. Dies ist äußerst vorteilhaft, bspw. auch raumsparend.

Erfindungsgemäße Gelenkketten zeichnen sich auch durch universale Anwendungsmöglichkeiten aus.

So eignen sie sich hervorragend bspw. für folgende Anwendungsgebiete: als Gelenkkette für Zugmittelgetriebe; als Förderkette für Förderer; als Lastkette zum Tragen und Bewegen von Lasten; als Armierungskette zum Armieren von elastomeren oder sonstigen Bauteilen, wie Halteringe, Dichtungen, Manschetten usw.; als Antriebskette; als Gelenkkette für Spielzeuge; als Treibkette usw.

Erfindungsgemäße Gelenkketten können auch besonders vorteilhaft in Verbindung mit sie führenden bzw. antreibenden bzw. von ihr angetriebenen Kettenrädern vorgesehen sein, insbesondere auch als endlose Gelenkketten. Als solche Gelenkkette ist es oft ausreichend und vorteilhaft, daß die Lagerspiele ihrer zueinander parallele Drehachsen aufweisenden Drehlager so gering sind, daß sie im wesentlichen nur in einer Ebene gebogen werden kann, also praktisch nur zweidimensionalen Lauf zuläßt. Doch kann sie ohne weiteres auch so gebaut werden, daß sie gute Kurvengängigkeit aufweist, d.h. sich auch seitlich verhältnismäßig stark auslenken läßt, also auf einfache Weise so weitergebildet werden kann, daß sie im Gegensatz zu den nur zweidimensionalen Lauf ermöglichenden Laschenketten auch dreidimensionalen Lauf zulassen kann, indem man lediglich vorsieht, daß das Lagerspiel der Drehlagerungen ihrer Kettenglieder und das Seitenspiel der sich überlappenden Seitenwände relativ zueinander hierfür ausreichend groß vorgesehen ist.

So können erfindungsgemäße Gelenkketten problemlos auch in Verbindung mit Kettentrommeln, auf die sie schraubenlinienförmig aufzuwinden ist, vorgesehen sein, oder auch für solche Zugmittelgetriebe, bei denen die Gelenkkette einen dreidimensionalen Bahnverlauf hat, wo man bisher als Zugmittel keine Laschenketten, sondern bspw. Rundgliederketten einsetzen mußte, die jedoch viel schlechtere Eigenschaften, u.a. auch viel schlechtere Laufeigenschaften als erfindungsgemäße Gelenkketten haben.

Erfindungsgemäße Gelenkketten eignen sich auch hervorragend zum Kämmen mit Verzahnungen aufweisenden Kettenrädern. Sie ermöglichen es u.a., falls erwünscht, auch sehr schmale Kettenräder vorzusehen. Auch ist der Eingriff der Querstege der Gelenkkette in die Zahnlücken des Kettenrades ohne weiteres so gestaltbar, daß auch höchste für das Kettenrad bzw. die Gelenkkette zulässige Kraftübertragungen erreicht werden können, indem die Querstege der Bügel in die Zahnlücken des Kettenrades formschlüssig so tief eingreifen, vorzugsweise vollständig eintauchen, daß auch höchste zulässige Kräfte übertragen werden können.

Auch lassen sich erfindungsgemäße Gelenkketten in praktisch beliebigen Baugrößen herstellen. Die Kettenglieder können extrem kleine Baugrößen ebenso erhalten wie mittlere und große Baugrößen und so einen mit Laschenketten praktisch nicht überspannbaren weiten Bereich überdecken. Auch diesbezüglich hat sie mehr Anwendungsgebiete als Laschenketten.

Wenn eine erfindungsgemäße Gelenkkette für Förderer eingesetzt wird, kann sie allein oder im Zusammenwirken mit weiteren derartigen Gelenkketten eine "Transportbahn" für zu fördernde Gegenstände bilden, auf die diese Gegenstände aufgelegt werden können. Oder an der oder den Gelenkketten können Halteorgane für von ihr bzw. ihnen zu tragende und zu fördernde Teile angeordnet sein, wie Haken, Tragkörbe usw.

Auch eignen sich erfindungsgemäße Gelenkketten hervorragend als Armierung zur Verstärkung elastomerer oder sonstiger verformbarer Teile, deren Verformbarkeit durch mindestens eine in sie eingesetzte oder eingebettete Gelenkkette erschwert oder begrenzt werden soll, um bspw. Überdehnen zu verhindern, wie es in vielen Fällen bei Dichtungen, Halteringen usw. der Fall ist.

Auch sind erfindungsgemäße Gelenkketten platzsparend und lassen sich auch in sehr schmalen Größen herstellen. Sie zeichnen sich auch durch bei gegebener Größe ihrer Kettenglieder hohe Belastungsfähigkeit und geringen Verschleiß aus.

Insgesamt erbringt die Erfindung äußerst kostengünstige, universal anwendbare Gelenkketten.

Ein Vorteil ist auch, daß die Kettenglieder der Gelenkkette unter sich gleich ausgebildet sein können. Falls ein Kettenschloß vorgesehen ist, kann dieses andere Ausbildung als die Kettenglieder aufweisen, bspw. axial verschiebbare Lagerzapfen aufweisen. Es kann in manchen Fällen auch zweckmäßig sein, mindestens zwei Kettenglieder unterschiedlich auszubilden. Man kann auch Kettenglieder mit mindestens je einem Trag- oder Arbeitsorgan, wie einem Kratzerstift, einem Förderorgan, wie z.B. einem Traghaken, einer Gabel, einem Winkel als Förderorgan oder dgl. oder mit Maßnahmen zur Anbringung von Förderorganen oder dgl., wie Haken, Gabeln, Stifte oder dgl. versehen und andere Kettenglieder nicht oder alle Kettenglieder mit solchen Trag- oder Arbeitsorganen versehen. Bei unterschiedlicher Ausbildung von mindestens zwei Kettengliedern können diese sich bevorzugt ähnlich sein, also bspw. nur durch geringe konstruktive Details unterscheiden, wie bspw. unterschiedliche bzw. fehlende Maßnahmen zur Anordnung von Förderorganen.

Die Erfindung bezieht sich auch auf einen Kettentrieb bestehend aus einem Kettenrad und einer erfindungsgemäßen Gelenkkette. Erfindungsgemäß können die Querstege der Kettenglieder der Gelenkkette so vorgesehen sein, daß sie in Zahnlücken der Umfangsverzahnung des Kettenrades teilweise, vorzugsweise vollständig eindringen können zwecks formschlüssiger Verbindung der Gelenkkette mit dem Kettenrad. Hierbei dienen also die Querstege der Kettenglieder der Gelenkkette als mit dem Kettenrad zusammenwirkende Mitnehmer zum formschlüssigen Koppeln der Gelenkkette mit dem Kettenrad. In Sonderfällen kann auch vorgesehen sein, daß die Kettenglieder andere in Zahnlücken der Kettenräder eindringende Mitnehmer aufweisen. Bspw. können an den Schenkeln der Bügel im Abstand von den Querstegen oder an den Armen abgewinkelte Mitnehmer angeordnet sein oder die Lagerzapfen können über die sie aufnehmenden Lagerlöcher als bis in die Zahnlücken von Kettenrädern eindringende Mitnehmer verlängert sein.

Bevorzugt können die Querstege der Kettenglieder so ausgebildet sein, daß sie bis auf die Böden der Zahnlücken des Kettenrades gelangen können. Hierdurch ergibt sich ein gleichmäßig tiefer Eingriff der Querstege der Gelenkkette in die Zahnlücken des Kettenrades und optimale Kraftübertragung.

Die erfindungsgemäße Gelenkkette ermöglicht auch auf schmalen Kettenrädern guten Halt und Sitz, so daß für sie auch Kettenräder vorgesehen werden können, deren die Verzahnung aufweisende Scheibe ein gestanztes Blechteil ist, das ggf. das Kettenrad im ganzen bilden kann oder an dem noch eine Nabe oder dgl. angebracht sein kann, so daß dieses Kettenrad wesentlich kostengünstiger als gefräste Kettenräder ist.

Wenn besonders geringe Breite der Gelenkkette nach den Ansprüchen 1 oder 2 erwünscht ist, kann man dies auf einfache Weise dadurch erreichen, daß die beiden Lagerzapfen des Kettengliedes voneinander weggerichtet sind. Hierdurch befinden sich die an diese Lagerzapfen unmittelbar anschließenden Bereiche der beiden Seitenwände zwischen den die betreffenden Lagerlöcher aufweisenden Seitenwänden des betreffenden Kettengliedes. Auch dies ermöglicht besonders schmale, kostengünstige Kettenräder, wie sie oben beschrieben sind. Wenn der Gelenkkette mindestens ein mit ihr kämmendes Kettenrad zugeordnet ist, kann zweckmäßig vorgesehen sein, daß der kleinste lichte Abstand der Seitenwände des Kettengliedes zur Seitenführung der Gelenkkette nur geringfügig größer als die Breite des zwischen die Seitenwände eingreifenden Bereiches dieses Kettenrades ist.

Bei der Gelenkkette nach Anspruch 3 sind und bei den Gelenkketten nach den Ansprüchen 1 und 2 können die beiden Lagerzapfen des einzelnen Kettengliedes der Gelenkkette aufeinander zu gerichtet sein. Hierdurch wird die Führung der Gelenkkette auf einem Kettenrad besonders gut, u.a. weil die der Seitenführung auf dem Kettenrad dienenden Bereiche der Seitenwände der Kettenglieder relativ großflächig sein können und entsprechend gute, besonders verschleißarme Führung der Gelenkkette auf dem Kettenrad bewirken können. Auch ist das Zusammenfügen der Kettenglieder werkzeugmäßig besonders einfach durchzuführen.

In der Zeichnung sind Ausführungsbeispiele der Erfindung dargestellt. Es zeigen:

Fig. 1 ein ebenes Blechstanzteil, aus dem durch Biegen ein Kettenglied einer Gelenkkette gemäß einem Ausführungsbeispiel der Erfindung gebildet wird,

Fig. 2 eine linksseitige Stirnansicht des Stanzteiles nach Fig. 1,

Fig. 3 eine Draufsicht auf das aus dem Stanzteil nach Fig. 1 durch Biegen gebildeten Kettenglied,

Fig. 3A eine Variante des Kettengliedes nach Fig. 3, in gebrochener Darstellung,

Fig. 4 eine Stirnansicht des Kettengliedes nach Fig. 3, gesehen in Richtung des Pfeiles A der Fig. 3,

Fig. 5 einen längsgeschnittenen Ausschnitt aus einer Gelenkkette, die aus Kettengliedern gemäß den Fig. 3 und 4 gebildet ist, wobei das einzelne Kettenglied gemäß der Schnittlinie 5–5 der Fig. 3 geschnitten und ein Ausschnitt aus einem mit dieser Gelenkkette kämmenden Kettenrad strichpunktiert dargestellt ist,

Fig. 6 eine teilgeschnittene Draufsicht auf eine Gelenkkette nach Fig. 5,

Fig. 7 eine teilgeschnittene Draufsicht auf einen Ausschnitt aus einer Gelenkkette gemäß einem zweiten Ausführungsbeispiel der Erfindung, wobei ein Kettenrad ebenfalls ausschnittsweise strichpunktiert mit eingezeichnet ist,

Fig. 8 und 9 Draufsichten auf Kettenglieder gemäß weiteren Ausführungsbeispielen der Erfindung,

Fig. 10 und 11 Teillängsschnitte durch Gelenkketten mit Kettengliedern nach Fig. 8 bzw. 9,

Fig. 12 eine schaubildliche Ansicht eines Kettengliedes gemäß einem weiteren Ausführungsbeispiel der Erfindung.

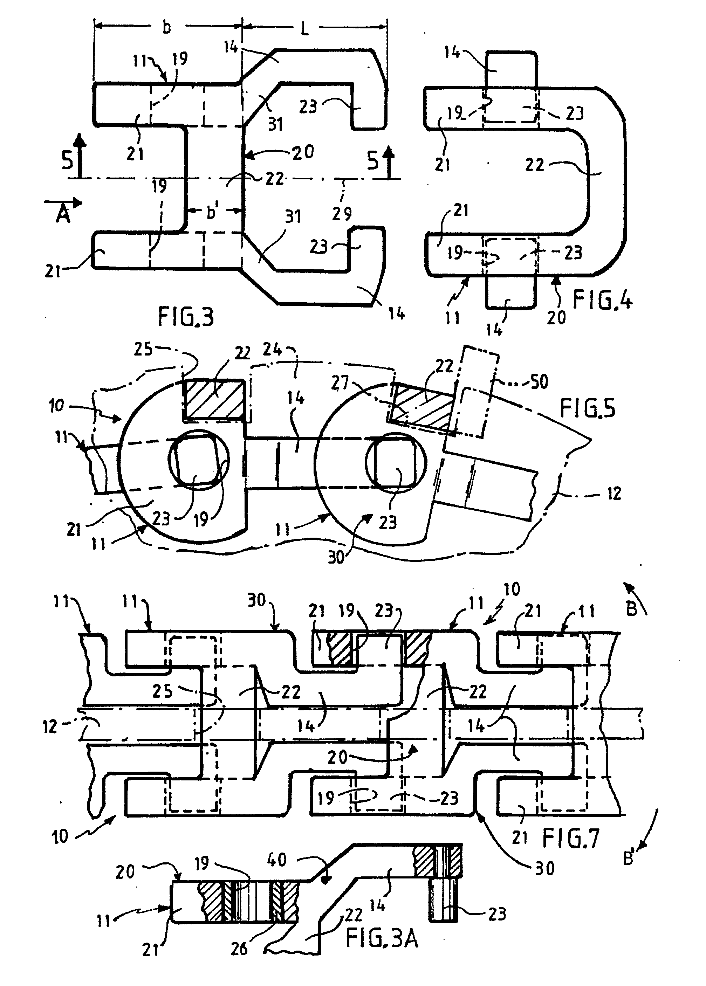

Die in dem Ausführungsbeispiel nach Fig. 5 und 6 ausschnittsweise dargestellte Gelenkkette 10 ist aus jeweils einstückigen, unter sich gleich ausgebildeten Kettengliedern 11 gemäß den Fig. 3 und 4 zusammengesetzt. Es kann sich um eine endlose Gelenkkette 10 handeln, die vorzugsweise ein Zugmittel eines Zugmittelgetriebes oder eine Förderkette eines Förderers sein kann. Oder es kann sich auch um eine endliche Gelenkkette 10 handeln, bspw. eine Lastkette. Die Gelenkkette 10 kann auch als Armierungskette zum Armieren von verformbaren Gegenständen, wie Ringdichtungen oder dgl., vorgesehen sein. Auch andere Anwendungszwecke dieser Gelenkkette sind denkbar, bspw. für Spielzeuge. In dem Ausführungsbeispiel nach den Fig. 5 und 6 ist strichpunktiert ein Ausschnitt aus einem Kettenrad 12 dargestellt, das mit dieser Gelenkkette 10 kämmt.

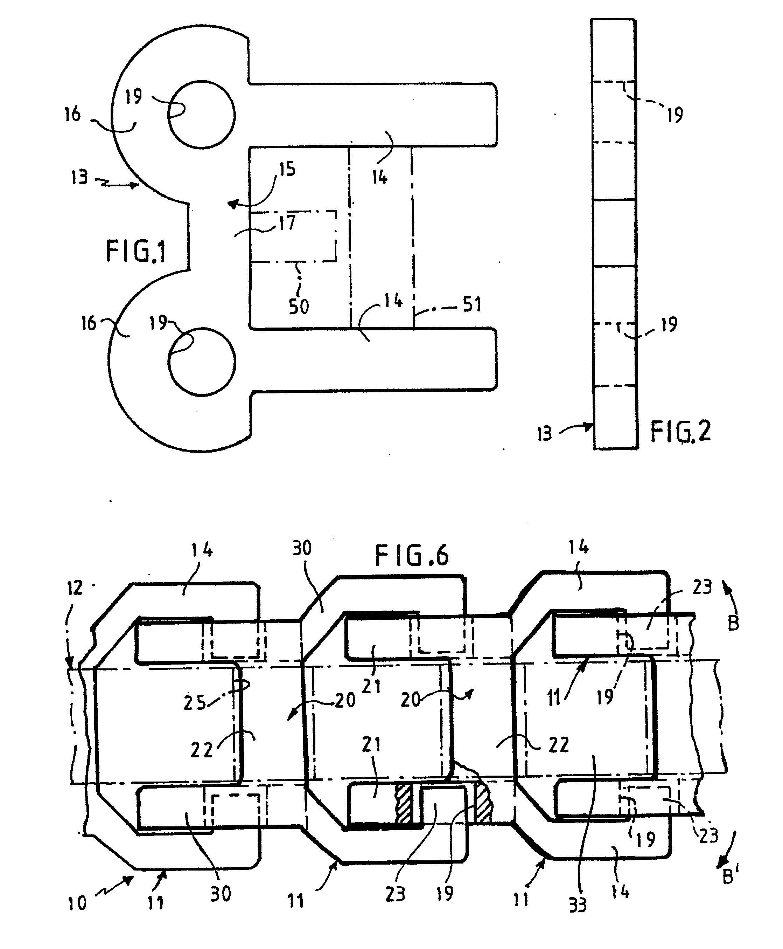

Das einzelne Kettenglied 11 (s. auch Fig. 3 und 4) ist jeweils aus einem einstückigen, ebenen aus Metallblech ausgestanztem Stanzteil 13 nach Fig. 1 und 2 durch Biegen hergestellt und vorzugsweise unelastisch starr. Dieses Stanzteil 13 hat konstante Dicke von bspw. 0,5 bis 5 Millimeter, wobei die Dicke jedoch auch noch größer oder noch kleiner vorgesehen werden kann. Es kann bspw. aus Stahlblech, oder in einfacheren Fällen aus Eisenblech oder auch aus Blech anderer Metalle ausgestanzt sein. Dieses noch ebene Stanzteil 13 weist zwei Arme 14 auf, die an einem beim fertigen Kettenglied 11 dessen Bügel 20 bildenden Querabschnitt 15 senkrecht zu ihm angeordnet sind. Dieser Querabschnitt 15 weist zwei ungefähr kreissegmentförmige Bereiche 16 auf, die durch einen kurzen Steg 17 konstanter Breite miteinander verbunden sind. Jeder der beiden Bereiche 16 weist ein mit dessen Radiusmittelpunkt konzentrisches kreisrundes Lagerloch 19 auf. Diese Lagerlöcher 19 bilden die beiden Lagerlöcher 19 des aus diesem Stanzteil 13 durch Biegen hergestellten Kettengliedes 11 nach den Fig. 3 und 4. Der gesamte Querabschnitt 15 bildet nach dem Biegen den ungefähr U-förmigen Bügel 20, dessen beiden Schenkel 21, die zueinander ungefähr parallel sind oder ggf. auch zueinander in ihren Längsrichtungen und/oder in Längsrichtung der Kette 10 divergieren können, im wesentlichen durch die beiden Bereiche 16 des Stanzteiles und dessen Quersteg oder Mittelsteg 22 durch den Steg 17 zuzüglich geringer Teilbereiche der Bereiche 16 des Stanzteiles 13 gebildet ist. Die Mittelpunkte der beiden miteinander fluchtenden Lagerlöcher 19 befinden sich in ungefähr halber Höhe des Kettengliedes 11 und in dieser ungefähr halben Höhe des Kettengliedes streben von den beiden Schenkeln 21 des Bügels 20 auch die beiden Arme 14 in Längsrichtung der Kette 11 zum benachbarten Kettenglied 11 ab. Diese beiden Arme 14 sind zuerst von ihren Basen aus zueinander divergierend nach außen und dann parallel zueinander und anschließend zur Bildung von Lagerzapfen 23 rechtwinklig aufeinander zu abgewinkelt, wie es Fig. 3 besonders deutlich zeigt. Diese beiden Lagerzapfen 23 weisen ungefähr rechteckförmige, hochkantgestellte Querschnitte auf und fluchten miteinander. Sie sind bei dem Zusammenbau der Kette 11 zur Drehlagerung der durch sie gelenkig miteinander verbundenen beiden Kettenglieder 11 in die beiden Lagerlöcher 19 des betreffenden benachbarten, gleich ausgebildeten Kettengliedes 11, wie aus Fig. 5 und 6 ersichtlich ist, von außen her eingesetzt. Sie haben ungefähr dem Abstand der Lagerlöcher 19 entsprechenden Abstand voneinander und enden bevorzugt noch in den Lagerlöchern 19 oder schließen mit ihnen bündig ab. Bevorzugt engen sie den Zwischenraum zwischen den Schenkeln 21 nicht ein, was vorteilhaft ist für das Eingreifen des Kettenrades 12, die Führung der Kette 10 auf ihm und großen Teilkreisdurchmesser der Kette 10. Der minimale Abstand zwischen den Armen 14 des Kettengliedes 11 ist gleich oder größer als der Abstand der Schenkel 21 des Bügels 20 voneinander. Die Längsachsen der Lagerzapfen 23 des Kettengliedes 11 sind parallel zu den Längsachsen von dessen Lagerlöchern 19, so daß eine aus solchen Kettengliedern 11 zusammengesetzte Kette 10 das Kettenrad 12 mit beliebigen gewünschten Umschlingungswinkeln umschlingen kann.

Der dem Abstand der beiden Schenkel 21 voneinander entsprechende Abstand der beiden Lagerlöcher 19 des Kettengliedes ergibt, daß der Zwischenraum 33 zwischen den beiden Schenkeln 21 und damit auch der durch diesen Zwischenraum 33 mit gebildete Zwischenraum zwischen den beiden Lagerlöchern 19 völlig frei ist, so daß das Kettenrad 12 in diesen Zwischenraum 33 und damit auch zwischen die Lagerlöcher 19 beliebig eindringen kann, wie es die Figuren 5 und 6 zeigen, wo sich die Lagerlöcher 19 zu beiden Seiten des zwischen ihnen liegenden Kettenrades 12 befinden.

Man kann das Kettenglied 11 auch so beschreiben, daß es zwei sich in Längsrichtung der Kette 10 erstreckende, aufrechte Seitenwände 30 aufweist, von denen jede durch je einen Schenkel 21 und Arm 14 gebildet ist. Diese Seitenwände 30 sind nur obenseitig nahe ihren Längsmitten durch den Quersteg 22 fest miteinander verbunden. Jede Seitenwand 30 ist mittels des kurzen schrägen Bereiches 31 abgekröpft und weist an ihrem einen Längsendbereich das Lagerloch 19 auf und ist an ihrem anderen Längsendbereich zur Bildung des Lagerzapfens 23 abgewinkelt. Diese Seitenwände 30 sind mit dem Mittel- oder Quersteg 22 unbeweglich einstückig verbunden und nur durch ihn zusammengehalten und weisen ebenso wie der Quersteg 22 ungefähr rechteckförmige Querschnitte auf.

Jedes Kettenglied 11 dieser Kette 10 ist unter sich gleich ausgebildet. Falls erwünscht, kann im Falle einer Endloskette ein Kettenschloß zum Verbinden der Enden der aus gleichen Kettengliedern 11 gebildeten Gelenkkette 10 vorgesehen sein. Doch kann diese Gelenkkette 10, falls sie als endlose Kette vorgesehen ist, auch ohne Kettenschloß nur aus den dargestellten Kettengliedern 11 hergestellt sein.

Jedes Kettenglied 11 ist zu einer Längsmittelebene 29 symmetrisch. Da die Arme 14 des einzelnen Kettengliedes 11 die beiden Schenkel 21 des benachbarten Kettengliedes 11 außenseitig teilweise übergreifen, engen sie den Innenraum der Kettenglieder 11 nicht ein. Dies ermöglicht es, Ketträder, wie 12, für diese Gelenkkette 10 vorzusehen, deren Breite im Bereich des Eingriffes mit der Gelenkkette 10 nur geringfügig kleiner als die Breite des lichten Zwischenraumes zwischen den Schenkeln 21 des U-förmigen Bügels 20 des einzelnen Kettengliedes 11 ist, da die Lagerzapfen 23 nicht über die Schenkel 21 nach innen vorstehen.

Ein Ausschnitt aus einem Kettenrad 12 ist in Fig. 5 und 6 strichpunktiert eingezeichnet. Wie zu sehen ist, können die zwischen den Zähnen 24 des Kettenrades 12 vorhandenen Zahnlücken 25 Tiefen aufweisen, die ohne weiteres vorteilhaft gleich oder größer als die Höhe des in sie eingreifenden Mittelsteges 22 des Bügels 20 des einzelnen Kettengliedes 11 sein können, so daß diese an den Kettengliedern 11 obenseitig angeordneten Querstege 22 vollständig in die Zahnlücken 25 eintauchen können, was besonders hohe Kraftübertragung bei geringen Flächenpressungen zwischen dem Quersteg 22 und der betreffenden Zahnflanke des Kettenrades 12 zuläßt.

Da die Querstege 22 auf den Böden der Zahnlücken 25 aufsitzen können, übergreifen dann entsprechend die Schenkel 21 das Kettenrad 12 in radialer, auf die Drehachse des Kettenrades zu gerichteter Richtung derart, daß die Lagerlöcher 19 der Drehachse des Kettenrades näher als die Zahnlücken 25 sind, was besonders günstig ist.

Indem diese Querstege 22 ferner bevorzugt ungefähr rechteckförmige Querschnitte aufweisen können, wird hierdurch besonders guter Formschluß zwischen ihnen und der Kettenradverzahnung erreicht. Auch läßt sich praktisch spielfreies Kämmen der Kettenglieder 11 mit dem Kettenrad 12 durch geeignete Gestaltung der Zähne und Zahnlücken des Kettenrades 12 problemlos erreichen. Die Kraftübertragung zwischen Kettenrad 12 und Gelenkkette 10 ist also außerordentlich gut und es lassen sich hohe Kräfte übertragen. Auch ist die Seitenführung der Kette 10 auf dem Kettenrad 12 optimal.

In diesem Ausführungsbeispiel sind die Lagerzapfen 23 des einzelnen Kettengliedes 11 infolge von dessen Ausstanzen aus einem ebenen Blech im Querschnitt ungefähr rechteckförmig. Sie lassen sich jedoch, falls erwünscht, bspw. durch Prägen auch stärker abrunden und, falls erwünscht, auch ohne weiteres mit kreisrunden Querschnitten herstellen. Zumindest in einfachen Fällen ist es jedoch ausreichend, wenn diese Lagerzapfen 23 ungefähr rechteckförmige oder quadratische Querschnitte haben, was u.a. den Vorteil besonders kostengünstiger Ausbildung hat.

Ein Vorteil der dargestellten Kette 10 ist auch, daß sie infolge ihrer guten Seitenführung auf Ketträdern so schmal sein kann, daß das zugeordnete Kettenrad 12 dann entsprechend so schmal sein kann, daß es durch Ausstanzen und ggf. Prägen kostengünstig aus Blech hergestellt sein kann, so daß seine Zähne dann nicht mehr, wie bei den bekannten Ketträdern, gefräst werden müssen.

Bei der in Fig. 3A dargestellten Ausführungsform einer ausschnittsweise dargestellten Variante des Kettengliedes 11 nach Fig. 3 sind die hier kreisrunde Querschnitte aufweisenden Lagerzapfen 23 nicht einstückig mit den sie tragenden Armen 14, sondern an diese angenietet. Auch die Lagerlöcher 19 sind hier nicht durch in die Schenkel 21 eingestanzte Löcher gebildet, sondern durch in solche Löcher bspw. im Preßsitz eingesetzte Lagerbuchsen 26, die über die Schenkel 21 jedoch nicht überstehen. Diese Maßnahmen ermöglichen, die Lagerbuchsen 26 bzw. Lagerzapfen 23 aus besonders vorteilhaften Lagermetallen herzustellen und den restlichen Hauptkörper 40 des einzelnen Kettengliedes 11 einstückig aus anderem Metall herzustellen, das bspw. besonders hohe Zugkräfte aushalten kann oder besonders kostengünstig und leicht zu stanzen und zu biegen ist. Der Hauptkörper 40 ist ein einstückiges Blechteil.

Die Gesamtlänge des einzelnen Kettengliedes 11 ist in dem Ausführungsbeispiel nach den Fig. 3–6 mehrfach größer – hier etwa 5- bis 6-fach größer – als die Breite seines rechteckförmige Querschnitte aufweisenden Quer- oder Mittelsteges 22. Der Steg 22 kann jedoch auch noch breiter oder schmaler als dargestellt sein und die Arme 14 können ebenfalls noch länger oder kürzer als dargestellt vorgesehen werden, falls längere oder kürzere Kettenglieder 11 gewünscht sind. Auch die Breite und Höhe des Kettengliedes 11 kann kleiner oder größer als dargestellt gemacht werden.

Die gesonderten Lagerlöcher 19 des Kettengliedes 11 sind bei allen Ausführungsbeispielen in den von den Lagerzapfen 23 abgewendeten Längsendbereichen der Seitenwände 30 des betreffenden Kettengliedes 11 angeordnet und ihr Abstand voneinander entspricht dem Abstand der Seitenwände 30 in ihrem Bereich voneinander. Der hierdurch zwischen den beiden Lagerlöchern 19 vorhandene Durchlaß kann als Durchlaß für Kettenräder und/oder sonstige Teile, wie z.B. beim Ausführungsbeispiel nach Fig. 7 auch als Freiraum für die Arme 14 eines benachbarten Kettengliedes 11 ausgenutzt werden.

Diese Gelenkkette 10 nach den Fig. 5 und 6 ist baulich äußerst einfach und kostengünstig. Auch kann sie große Kräfte übertragen und erlaubt besonders guten, flächengroßen Formschluß mit Kettenrädern 12. Dies ergibt auch geringen Verschleiß des Kettenrades 12 und der mit ihm kämmenden Querstege 22. Ein weiterer Vorteil ist die sehr gute Führung der Gelenkkette 10 durch Kettenräder 12 infolge der sehr gute Seitenführung auf Kettenrädern 12 bewirkenden Schenkel 21 des Bügels 20, die mit ihren dem Kettenrad. 12 zugewendeten, relativ großen Breitseiten mit diesen zur Seitenführung der Gelenkkette 10 zusammenwirken können. Auch das vorzugsweise vorgesehene vollständige Eintauchen der Querstege 22 in die Zahnlücken 25 von Kettenrädern 12 bis vorzugsweise zum Aufsetzen auf deren Böden 27 ist günstig. Ggf. kann jedoch auch vorgesehen sein, daß diese Querstege 22 nur teilweise in die Zahnlücken 25 eintauchen und/oder deren Böden 27 nicht berühren, wenn dies aus irgendwelchen Gründen erwünscht ist. Auch dann läßt sich noch gute und hohe Kraftübertragung erreichen.

Bei den Kettengliedern 11 nach den Fig. 3–6 sind die Arme 14 hakenförmig mit aufeinander zu gerichteten Hakenöffnungen gebogen.

In dem Ausführungsbeispiel nach Fig. 7 ist eine Gelenkkette 10 ausschnittsweise dargestellt, die wiederum mit einem strichpunktiert angedeuteten Kettenrad 12 kämmen kann, dessen Zahnlücken 25 etwas breiter als die Breite der Quer- oder Mittelstege 22 der Kettenglieder 11 sind. Das einzelne Kettenglied 11 dieser Gelenkkette 10 unterscheidet sich von dem nach dem Ausführungsbeispiel nach den Fig. 3 bis 6 im wesentlichen dadurch, daß die die Lagerzapfen 23 aufweisenden Arme 14 von den sie tragenden Schenkeln 21 des U-förmigen Bügels 20 des Kettengliedes 11 aus nicht nach außen gebogen sind, sondern nach innen gebogen sind und so zwischen die beiden Schenkel 21 des Bügels 20 des jeweils benachbarten Kettengliedes 11 hineinragen. Von diesem Innenraum zwischen den beiden Bügeln 20 aus ragen ihre miteinander fluchtenden Lagerzapfen 23 in die Lagerlöcher 19 der Schenkel 21 des jeweils benachbarten Kettengliedes 11 zur Drehlagerung dieser beiden Kettenglieder 11 relativ zueinander um die durch die betreffenden beiden Lagerzapfen 23 bestimmte Drehachse. Die Arme 14 sind wiederum hakenförmig gebogen, doch sind hier ihre Hakenöffnungen voneinander weg nach außen gerichtet.

Der ebene Stanzschnitt des einzelnen Kettengliedes 11 nach Fig. 7 kann ähnlich oder gleich dem Stanzschnitt 13 nach den Fig. 1 und 2 sein, so daß entsprechend der U-förmige Bügel 20 des Kettengliedes 11 nach Fig. 7 den Bügel 20 des Kettengliedes 11 nach den Fig. 3 bis 6 vollständig entsprechen kann und der Unterschied nur in dem abweichenden Biegen der Arme 14 zu bestehen braucht. Man kann deshalb, falls erwünscht, auch die Kettenglieder 11 nach den Fig. 3 und 7 in einer Gelenkkette miteinander kombinieren, bspw. alternierend oder bereichsweise anordnen.

Die Schenkel 21 und Arme 14 des Kettengliedes 11 bilden wiederum zwei sich in Längsrichtung der Kette erstreckende Seitenwände 30.

Bei der Gelenkkette 10 nach Fig. 7 steht für den Eingriff eines Kettenrades 12 nur die lichte Breite zwischen den beiden Armen 14 jedes Kettengliedes 11 zur Verfügung, so daß sich diese Gelenkkette 10 insbesondere für sehr schmale Kettenräder 12 eignet, auf denen sie mittels der Arme 14 ebenfalls sehr gut geführt wird.

Die Seitenführung dieser Gelenkketten nach den Fig. 5 bis 7 ist in jedem Fall ausgezeichnet und besser als es bei Rollenketten erreichbar ist, so daß erfindungsgemäße Gelenkketten in vielen Fällen, wenn für die Führung von Rollenketten bereits zusätzliche Seitenführungen erforderlich sind, noch keine solchen zusätzlichen Seitenführungen erforderlich werden.

Erfindungsgemäße Gelenkketten können auch hohe Zugkräfte übertragen, die wesentlich größer sein können als die von Drahtketten vergleichbarer Größe und oft ähnlich groß wie bei Rollenketten vergleichbarer Größe oder ggf. noch größer sein können. Auch läßt sich die Höhe der einzelnen Kettenglieder 11 kleiner als bei Rollenketten vergleichbarer Zugkräfte halten und ein vorbestimmter Teilkreisdurchmesser der Gelenkketten 10 auf einem Kettenrad läßt bei einem Kettenrad gegebenen Außendurchmessers sich mit erheblich kleinerem Außenradius des mit dem Kettenrad 12 kämmenden Kettenbereiches als bei einer Rollenkette erreichen. Hierdurch lassen sich bspw. größere Getriebeübersetzungen von Zugmittelgetrieben ohne Vergrößerung des Platzbedarfes als bei Einsatz von Rollenketten erreichen.

Ferner können die Kettenglieder 11 der Gelenkketten 10 kürzer als bei Rollenketten vergleichbarer Größe sein und dadurch die Zähnezahl der Kettenräder bei gegebenem Außendurchmesser entsprechend vergrößert werden, was in vielen Fällen ebenfalls vorteilhaft ist.

Die erfindungsgemäße Gelenkkette 10 kann also an die Stelle von Rollenketten treten. Sie kann jedoch auch an die Stelle anderer Arten von Ketten treten, wie Drahtketten, Rundgliederketten, Stegketten, Hülsenketten usw.

Wenn die Gelenkketten 10 für Förderzwecke bei Förderern eingesetzt werden, können sie allein der Förderung dienen oder mindestens zwei Gelenkketten 10 parallel nebeneinander angeordnet sein, so daß dann die Förderbahn durch entsprechend mehrere Gelenkketten 10 gebildet ist.

Für Förderzwecke haben die Gelenkketten 10 auch den Vorteil, ohne weiteres so ausgebildet werden zu können, daß sie seitlich stärkere Auslenkungen als Rollenketten erlauben. Und zwar ist unter seitlicher Auslenkung die Auslenkung der Kette 10 in Richtung des Pfeiles B bzw. des Pfeiles B' verstanden. Die Größe des maximal möglichen Winkels dieser seitlichen Auslenkung in Richtung der Pfeile B bzw. B', den das einzelne Kettenglied 11 zum benachbarten Kettenglied 11 erlaubt, hängt von dem Spiel der Arme 14 des einen Kettengliedes 11 relativ zu den Schenkeln 21 des betreffenden benachbarten Kettengliedes 11 und/oder dem Lagerspiel der Lagerzapfen 23 in den Lagerlöchern 19 des jeweils anderen Kettengliedes 11 ab und kann demzufolge durch entsprechende Bemaßungen in jeweils gewünschter Größe vorgesehen werden. Diese Möglichkeit besteht bei Rollenketten dagegen nicht.

Wie ferner das Kettenglied 11 zeigt, ist die Breite b (Fig. 3) der Schenkel 21 seines Bügels 20 größer, zweckmäßig erheblich größer, bspw. 2- bis 3-fach größer als die Breite b' des Mittelsteges 21. Die Schenkel 21 stehen in Längsrichtung der Kette 10 gemäß Fig. 3 und 5 über den Mittelsteg 22 auf der von den Armen 14 abgewendeten Seite weit über. Die Länge L der Arme 14 entspricht in den Ausführungsbeispielen ungefähr der Breite b der Schenkel 21 oder ist etwas größer, was ebenfalls vorteilhaft ist. Auch andere Abmessungen sind möglich.

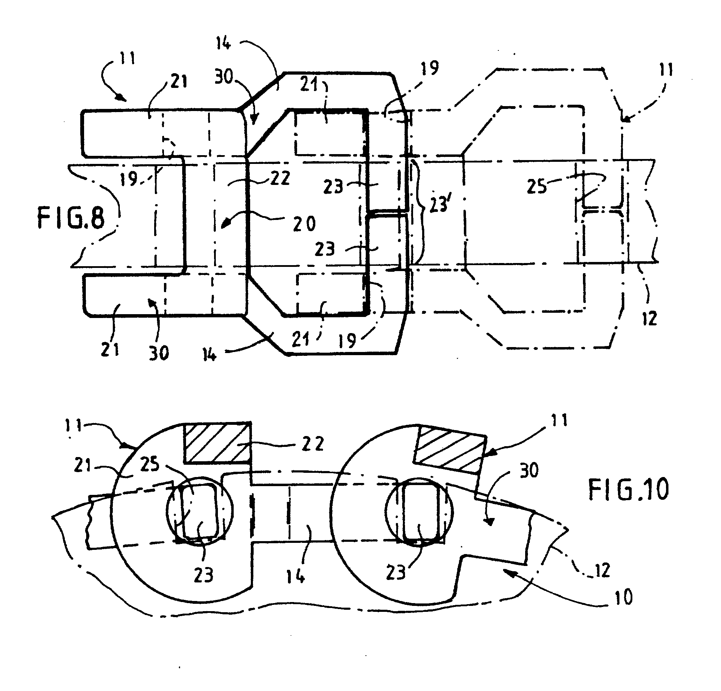

Fig. 8 zeigt ein weiteres Ausführungsbeispiel eines Kettengliedes 11 in voll ausgezogener Darstellung zusammen mit einem mit ihm gelenkig verbundenen, gleichen, strichpunktiert dargestellten Kettenglied 11 und einem strichpunktiert dargestellten Ausschnitt aus einem zugeordneten Kettenrad 12. Dieses Kettenglied 11 unterscheidet sich von dem nach Fig. 3 nur dadurch, daß die beiden miteinander fluchtenden Lagerzapfen 23 aufeinander zu derart verlängert sind, daß sie aneinander anstoßen oder nur geringen Abstand voneinander haben. Ggfs. können diese beiden Lagerzapfen 23 miteinander durch einen Schweißpunkt verbunden sein, falls besonders hohe Festigkeit einer aus solchen Kettengliedern 11 gebildeten Gelenkkette 10 gewünscht wird. Ein Ausschnitt aus einer solchen Gelenkkette 10, die aus solchen einstückigen Kettengliedern 11 nach Fig. 8 gebildet ist, ist in Fig. 10 längsgeschnitten zusammen mit einem strichpunktiert dargestellten Ausschnitt aus einem mit dieser Gelenkkette 10 kämmenden Kettenrad 12 dargestellt. Und zwar bilden hier nicht mehr die Querstege 22 der Kettenglieder 11 die in die Zahnlücken 25 des Kettenrades 12 eingreifenden Mitnehmer der Gelenkkette 10, sondern die Mitnehmer der Gelenkkette 10 werden hier durch die Lagerzapfen 23 gebildet, und zwar durch deren im Zwischenraum zwischen den beiden Schenkeln 21 des Bügels 20 des jeweils benachbarten Kettengliedes 11 befindlichen Bereiches 23'. Hierdurch entspricht der Teilkreisdurchmesser dieser Gelenkkette 10 dem durch die Längsachsen der Lagerzapfen 23 bestimmten Teilkreisdurchmesser.

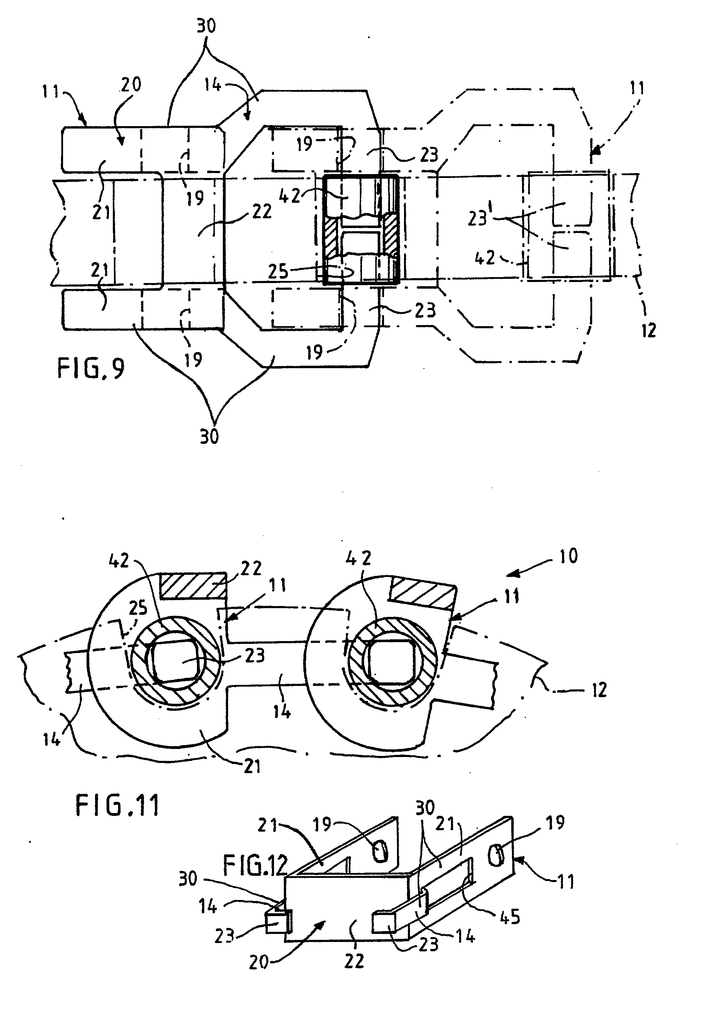

In Fig. 9 ist ein Ausführungsbeispiel eines weiteren Kettengliedes 11 zusammen mit einem gleichen, strichpunktiert angedeuteten Kettenglied und einem ebenfalls strichpunktiert angedeuteten Ausschnitt eines zugeordneten Kettenrades 12 dargestellt, das einer Variante des Kettengliedes 11 nach Fig. 8 entspricht, indem es sich von dem Kettenglied 11 nach Fig. 8 dadurch unterscheidet, daß auf den über die beiden Schenkel 21 des benachbarten Kettengliedes 11 nach innen überstehenden Endbereichen 23' der Lagerzapfen 23 eine vorzugsweise kreiszylindrische Rolle 42 drehbar gelagert ist, die die Gestalt eines kreiszylindrischen kurzen Rohres hat und vorzugsweise aus gehärtetem Stahl bestehen kann. Sie ist auf den Lagerzapfenbereichen 23' um ihre mit den Längsachsen der Lagerzapfen 23 fluchtende Längsachse drehbar gelagert. Diese drehbare Rolle 42 bildet den in Zahnlücken 25 des Kettenrades 12 zur formschlüssigen Kopplung mit diesem dienenden Mitnehmer dieses Kettengliedes 11. Fig. 11 zeigt in längsgeschnittener, ausschnittsweiser Darstellung eine aus solchen Kettengliedern 11 gebildete Gelenkkette 10, die also eine Rollenkette bildet. Diese Rollenkette 10 weist äußerst einfache, kostengünstige Bauart auf, die wesentlich einfacher und kostengünstiger als die von Laschen-Rollenketten ist. Wenn diese Rollenkette 10 mit einem Kettenrad 12 kämmt, dann dringen ihre Rollen 42 in die Zahnlücken 25 des Kettenrades 12 zur Mitnahme dieses Kettenrades 12 durch die Rollenkette 10 oder zur Führung oder zur Mitnahme der Rollenkette 10 durch das Kettenrad 12 ein. In diesem Ausführungsbeispiel sind die Zahnlücken 25 des Kettenrades 12 so tief, daß die Rollen 42 vollständig in diese Zahnlücken 25 eindringen. Doch ist ohne weiteres auch möglich, den Durchmesser des Kettenrades 12 so zu verringern, daß die Rollen 42 nicht vollständig in die Zahnlücken 25 eindringen. Das einzelne Kettenglied 11 besteht in diesem Ausführungsbeispiel jeweils aus einem einstückigen, durch den Bügel 20 und die Arme 14 mit Lagerzapfen 23 gebildeten Hauptkörper, der aus Blech durch Stanzen und Biegen hergestellt ist, und der Rolle 42.

In der Zeichnung sind die Arme jedes Kettengliedes 11 jeweils an den beiden Schenkeln 21 des Bügels 20 angeordnet, was baulich besonders günstig und einfach ist und auch sonstige Vorteile ermöglicht, z. Bsp. besonders tiefen Eingriff der Kettenglieder 11 in die Kettenräder 12. Es ist jedoch auch denkbar, in manchen Fällen, bspw. bei dem Kettenglied 11 nach Fig. 9, die beiden Arme 14 vom Mittelsteg 22 des Bügels 20 abstreben zu lassen.

An den Bügeln 20 oder Armen 14, vorzugsweise an den Querstegen 22 der U-förmigen Bügel 20 der Kettenglieder 11 oder einer Teilanzahl der Kettenglieder 11 können oft zweckmäßig Maßnahmen getroffen sein, vorzugsweise mindestens ein Loch angeordnet sein, die dem Anbringen bzw. Befestigen von Zusatzteilen dienen, wie Förderorganen, z. Bsp. Stäben, Stiften, Fingern und dergl., um bspw. Mitnahme von Fördergut auf der Kette zu bewirken, oder von sonstigen Organen, wie z.Bsp. von Arbeitsorganen, Schutzorganen, Transportorganen usw. So können z.Bsp. oft zweckmäßig am Mittelsteg ein oder zwei Löcher angeordnet sein zur Anbringung solcher und ähnlicher Organe, bspw. auch zur Anbringung von Haken zum Anhängen von zu fördernden Gegenständen.

In allen Ausführungsbeispielen sind die beiden Seitenwände 30 des einzelnen Kettengliedes 11 jeweils durch einen einzigen, an den Oberseiten der Seitenwände angeordneten Quersteg 22 miteinander verbunden. Jedoch können gewünschtenfalls auch mehrere Querstege am Kettenglied 11 angeordnet sein, bspw. bei dem einstückigen Stanzteil 13 nach Fig. 1 zusätzlich zu dem am gebogenen Kettenglied den Quersteg 22 im wesentlichen bildender Steg 17 noch ein die beiden Arme 14 miteinander verbindender, zum Steg 17 paralleler Streifen 51 zusätzlich vorhanden sein, der nach dem Biegen des Kettengliedes 11 U-förmige Gestalt aufweist und einen das Kettenglied verstärkenden zweiten Quersteg bildet, so daß dieses Kettenglied 11 weiterhin einstückig ist. Dieser Quersteg 51 befindet sich wie der Quersteg 22 obenseitig des Kettengliedes, kommt jedoch tiefer zu liegen, weil die Arme 14 durch die schrägen Bereiche weiter nach außen gespreizt sind und eine Kette aus solchen Kettengliedern kann dann nicht mit dem in Fig. 5 dargestellten Kettenrad kämmen, sondern dieses Kettenrad muß dann zusätzliche, entsprechend tiefe Zahnlücken für diese Querstege 51 der Kettenglieder aufweisen, die in diesem Fall dann ebenfalls zusätzliche, mit dem Kettenrad kämmende Mitnehmer bilden und so die anwendbaren Zugkräfte der Kette noch weiter erhöhen. Oder diese Kette kann für andere Zwecke vorgesehen sein, bei der sie nicht mit Kettenrädern kämmt.

Auch kann an das Stanzteil 13 nach Fig. 1 noch mindestens ein Trag- oder Arbeitsorgan mit angestanzt sein, das hier als Beispiel ein an den Steg 17 einstückig mit angeformter, rechtwinklig abstehender, strichpunktiert eingezeichneter Streifen 50 ist, der nach dem Biegen des Kettengliedes 11 vom Quersteg 22 rechtwinklig abstehen kann, wie strichzweipunktiert in Fig. 5 eingezeichnet ist und der bspw. als Kratzer, als Tragorgan, als Förderorgan oder dgl. dienen kann.

In Fig. 12 ist ein Kettenglied 11 gemäß einem weiteren Ausführungsbeispiel der Erfindung dargestellt, das für eine aus solchen Kettengliedern zusammengesetzte Gelenkkette bestimmt ist. Seine beiden Seitenwände 30 sind jeweils durch je einen in Längsrichtung der Kette sich erstreckenden, durch einen Quersteg 22 verbundenen Schenkel 21 eines U-förmigen Bügels 20 und je einen Arm 14 gebildet, wobei hier jedoch die Ebene des Quersteges 22 senkrecht zur Lauf- und Längsrichtung des Kettengliedes 11 gerichtet ist und im Falle eines Kettenrades den in dessen Zahnlücken eingreifenden Mitnehmer bildet. Aus den beiden Schenkeln 21 sind die beiden Arme 14 gestanzt und um 180° wie dargestellt nach rückwärts umgebogen. Die freien Enden der Arme 14 sind zu den Lagerzapfen 23 abgewinkelt. Die Lagerlöcher 19 befinden sich an den freien Endbereichen der Schenkel 21.

Auch dieses Kettenglied 11 läßt sich kostengünstig und materialsparend aus Blech ausstanzen und biegen. Es ergibt sich dabei besonders wenig Stanzabfall, da der Zuschnitt dieses Kettengliedes rechteckförmig ist, so daß es aus einem Band der Breite des U-förmigen Bügels 20 ausgestanzt werden kann.

## Patentansprüche

1. Gelenkkette, welche gelenkig miteinander verbundene einstückige Kettenglieder (11) aufweist, wobei das Kettenglied sich in Längsrichtung der Gelenkkette erstreckende, im seitlichen Abstand voneinander angeordnete Seitenwände (30) aufweist, an deren einen Längsendbereichen je ein Lagerzapfen (23) angeordnet ist, die in miteinander fluchtenden, im Abstand voneinander angeordneten Lagerlöchern (19) des ihnen benachbarten Kettengliedes (11) gelagert sind, wobei das Kettenglied (11) einen dem Zusammenhalt seiner Seitenwände (30) dienenden Quersteg (22) aufweist und die Seitenwände (30) je ein gesondertes Lagerloch (19) für die beiden Lagerzapfen (23) des diesen Lagerlöchern (19) benachbarten Kettengliedes (11) aufweisen, welche Lagerzapfen (23) der Drehlagerung des ihnen benachbarten Kettengliedes (11) dienen, dadurch gekennzeichnet, daß das Kettenglied (11) aus einem einstückigen, ebenen Stanzteil (13) aus Blech gebogen ist, dessen die Seitenwände (30) bildenden Bereiche in Bezug auf den Quersteg (22) abgebogen sind und die Seitenwände (30) an ihren einen Längsendbereichen die beiden Lagerlöcher (19) aufweisen und an ihren anderen Längsendbereichen die beiden Lagerzapfen (23) von ihnen abgebogen sind.

2. Gelenkkette, welche gelenkig miteinander verbundene Kettenglieder (11) aufweist, wobei das Kettenglied sich in Längsrichtung der Gelenkkette erstreckende, im seitlichen Abstand voneinander angeordnete Seitenwände (30) aufweist, an deren einen Längsendbereichen je ein Lagerzapfen (23) angeordnet ist, die in miteinander fluchtenden, im Abstand voneinander angeordneten Lagerlöchern (19) des ihnen benachbarten Kettengliedes (11) gelagert sind, wobei das Kettenglied (11) einen dem Zusammenhalt seiner Seitenwände (30) dienenden Quersteg (22) aufweist und die Seitenwände (30) je ein gesondertes Lagerloch (19) für die beiden Lagerzapfen (23) des diesen Lagerlöchern (19) benachbarten Kettengliedes (11) aufweisen, welche Lagerzapfen (23) der Drehlagerung des ihnen benachbarten Kettengliedes (11) dienen, dadurch gekennzeichnet, daß das Kettenglied (11) einen Hauptkörper (40) aufweist, der aus einem einstückigen, ebenen Stanzteil (13) aus Blech gebogen ist, das die Seitenwände (30) und den Quersteg (22) bildet und dessen die Seitenwände (30) bildenden Bereiche in Bezug auf den Quersteg (22) abgebogen sind und die Seitenwände (30) an ihren einen Längsendbereichen die beiden Lagerlöcher (19) aufweisen und an ihren anderen Längsendbereichen die beiden Lagerzapfen (23) aufweisen, und daß die Lagerzapfen (23) und/oder die Lagerlöcher (19) durch in die Seitenwände (30) des Hauptkörpers (40) eingesetzte, gesonderte Zapfen (23) bzw. in die Seitenwände (30) eingesetzte Lagerbuchsen (26) gebildet sind.

3. Gelenkkette, welche gelenkig miteinander verbundene Kettenglieder (11) aufweist, wobei das Kettenglied sich in Längsrichtung der Gelenkkette erstreckende, im seitlichen Abstand voneinander angeordnete Seitenwände (30) aufweist, an deren einen Längsendbereichen je ein Lagerzapfen (23) angeordnet ist, die in miteinander fluchtenden, im Abstand voneinander angeordneten Lagerlöchern (19) des ihnen benachbarten Kettengliedes (11) gelagert sind, wobei das Kettenglied (11) einen dem Zusammenhalt seiner Seitenwände (30) dienenden Quersteg (22) aufweist und die Seitenwände (30) je ein gesondertes Lagerloch (19) für die beiden Lagerzapfen (23) des diesen Lagerlöchern (19) benachbarten Kettengliedes (11) aufweisen, welche Lagerzapfen (23) der Drehlagerung des ihnen benachbarten Kettengliedes (11) dienen, dadurch gekennzeichnet, daß das Kettenglied (11) einen Hauptkörper und eine Rolle (42) aufweist, wobei der Hauptkörper aus einem einstückigen, ebenen Stanzteil (13) aus Blech gebogen ist, das die Seitenwände (30) und einen Quersteg (22) bildet und dessen die Seitenwände (30) bildenden Bereiche in Bezug auf den Quersteg (22) abgebogen sind und die Seitenwände (30) an ihren einen Längsendbereichen die beiden Lagerlöcher (19) aufweisen und an ihren anderen Längsendbereichen die beiden Lagerzapfen (23) von ihnen aufeinander zu abgebogen sind, und daß die Rolle (42) auf mindestens einem der beiden Lagerzapfen (23) drehbar gelagert ist.

4. Gelenkkette nach einem der Ansprüche 1, 2 oder 3, dadurch gekennzeichnet, daß das Kettenglied (11) einen U-förmigen Bügel (20) aufweist, dessen Mittelsteg den Quersteg (22) und dessen beiden Schenkel (21) zusammen mit mit dem Bügel (20) verbundenen Armen (14) die Seitenwände (30) bilden, wobei an den freien Endbereichen der Arme (14) die Lagerzapfen (23) und an den Schenkeln (21) die Lagerlöcher (19) angeordnet sind, wobei vorzugsweise jeder Arm (14) zusammen mit dem zugehörigen Lagerzapfen (23) hakenförmige Gestalt aufweist.

5. Gelenkkette nach Anspruch 4, dadurch gekennzeichnet, daß die beiden Arme (14) des Kettengliedes (11) an den beiden Schenkeln (21) des Bügels (20) angeordnet sind, vorzugsweise in ungefähr halber Höhe dieser Schenkel.

6. Gelenkkette nach Anspruch 4, dadurch gekennzeichnet, daß die beiden Arme des Kettengliedes vom Quersteg (22) des Bügels (20) abstreben.

7. Gelenkkette nach einem der Ansprüche 4 bis 6, dadurch gekennzeichnet, daß die Lagerlöcher (19) des Kettengliedes (11) ungefähr in halber Höhe des Bügels (20) angeordnet sind.

8. Gelenkkette nach einem der vorhergehenden Ansprüche, dadurch gekennzeichnet, daß die beiden Lagerzapfen (23) des Kettengliedes (11) im Längsabstand voneinander angeordnet sind, vorzugsweise in ungefährem Abstand der beiden Lagerlöcher (19) voneinander angeordnet sind.

9. Gelenkkette nach einem der vorhergehenden Ansprüche, dadurch gekennzeichnet, daß die beiden Lagerzapfen (23) und die Seitenwände (30) mit den Lagerlöchern (19) des Kettengliedes (11) zwischen sich Durchgänge für Kettenräder (12) zwecks Eingreifen des einen Mitnehmer bildenden Quersteges (22) in Zahnlücken (25) solcher Kettenräder (12) freilassen.

10. Gelenkkette nach einem der vorhergehenden Ansprüche, dadurch gekennzeichnet, daß der kleinste lichte Abstand der Seitenwände (30) des Kettengliedes (11) voneinander, vorzugsweise der der Schenkel (21) seines Bügels (20) zur Seitenführung der Gelenkkette auf einem zugeordneten Kettenrad (12) nur geringfügig größer als die Breite des zwischen die Seitenwände (30) eingreifenden Bereiches des Kettenrades (12) ist.

11. Gelenkkette nach einem der Ansprüche 1, 2 oder 4 bis 10, dadurch gekennzeichnet, daß die beiden Lagerzapfen (23) des Kettengliedes (11) aufeinander zu gerichtet sind.

12. Gelenkkette nach Anspruch 3 oder Anspruch 11, dadurch gekennzeichnet, daß die beiden aufeinander zu gerichteten Lagerzapfen (23) des Kettengliedes (11) durch einen Schweißpunkt miteinander verbunden sind.

13. Gelenkkette nach Anspruch 11 oder 12, dadurch gekennzeichnet, daß mindestens ein Lagerzapfen (23) des Kettengliedes (11) auch einen Mitnehmer des Kettengliedes bildet, der zum Eingreifen in Zahnlücken von Kettenrädern (12) dient, vorzugsweise beide Lagerzapfen aneinander anliegen.

14. Gelenkkette nach einem der Ansprüche 1, 2 oder 4 bis 10, dadurch gekennzeichnet, daß die beiden Lagerzapfen (23) des Kettengliedes (11) voneinander weg gerichtet sind, wobei vorzugsweise der kleinste lichte Abstand der Seitenwände des Kettengliedes (11) zur Seitenführung der Gelenkkette auf einem Kettenrad (12) nur geringfügig größer als die Breite des zwischen diese Seitenwände eingreifenden Bereiches des Kettenrades ist.

15. Gelenkkette nach einem der vorhergehenden Ansprüche, dadurch gekennzeichnet, daß die Breite des vorzugsweise ungefähr rechteckförmigen Querschnitt aufweisenden Quersteges (22) wesentlich kleiner als die Länge der Seitenwände (30) des Kettengliedes (11) ist, vorzugsweise der Quersteg (22) des Bügels (20) wesentlich schmaler als die beiden Schenkel (21) dieses Bügels (20) ist.

16. Gelenkkette nach einem der vorhergehenden Ansprüche, dadurch gekennzeichnet, daß die Kettenglieder (11) unter sich gleich oder ähnlich ausgebildet sind.

17. Gelenkkette nach einem der vorhergehenden Ansprüche, dadurch gekennzeichnet, daß der Quersteg (22) am Kettenglied obenseitig angeordnet ist.

18. Gelenkkette nach einem der vorhergehenden Ansprüche, dadurch gekennzeichnet, daß die Längsachsen der Lagerlöcher (19) des Kettengliedes (11) parallel zu den Längsachsen seiner Lagerzapfen (23) sind und daß vorzugsweise das Lagerspiel der Lagerzapfen (23) der Kettenglieder (11) in den sie jeweils lagernden Lagerlöchern (19) der benachbarten Kettenglieder und das Seitenspiel der Seitenwände (30) benachbarter Kettenglieder (11) für dreidimensionale Laufmöglichkeit der Gelenkkette (10) bemessen sind.

19. Gelenkkette nach einem der vorhergehenden Ansprüche, dadurch gekennzeichnet, daß das Kettenglied starr ist.

20. Gelenkkette nach einem der vorhergehenden Ansprüche, dadurch gekennzeichnet, daß an dem Kettenglied, vorzugsweise an seinem Quersteg (22) mindestens ein Trag- oder Arbeitsorgan (50), wie z.B. ein Stift, Haken, Gabel oder dgl., vorzugsweise einstückig mit ihm angeordnet ist.

21. Gelenkkette nach einem der vorhergehenden Ansprüche, dadurch gekennzeichnet, daß die beiden Seitenwände (30) des Kettengliedes (11) durch mindestens zwei Querstege (22, 51) miteinander fest verbunden sind, die vorzugsweise an der Oberseite des Kettengliedes angeordnet sind.

22. Gelenkkette nach einem der vorhergehenden Ansprüche, dadurch gekennzeichnet, daß die mit den Seitenwänden (30) des Kettengliedes einstückigen Lagerzapfen (23) abgerundet sind, vorzugsweise durch Prägen.

23. Kettentrieb bestehend aus einem Kettenrad (12) und einer Gelenkkette (10) nach einem der Ansprüche 1 bis 11 oder 14 bis 22, dadurch gekennzeichnet, daß die Querstege (22) der Kettenglieder (11) der Gelenkkette (10) so vorgesehen sind, daß sie in die Zahnlücken (25) der Umfangsverzahnung des Kettenrades (12) mindestens teilweise, vorzugsweise vollständig eindringen können zwecks formschlüssiger Verbindung der Gelenkkette (10) mit dem Kettenrad (12).

24. Kettentrieb nach Anspruch 23, dadurch gekennzeichnet, daß die Querstege (22) der Kettenglieder (11) der Gelenkkette (10) so ausgebildet sind, daß sie bis auf die Böden (27) der Zahnlücken (25) des Kettenrades (12) gelangen können.

## Claims

1. Articulated chain which has single-piece chain links (11) joined together in an articulated manner, the chain link having side walls (30) which are arranged at a lateral distance from each other and extend in the longitudinal direction of the articulated chain and at one longitudinal end region of which a bearing pin (23) is arranged in each case, which bearing pins are mounted in bearing holes (19) of the chain link (11) adjacent to them, which holes are arranged at a distance from each other and are aligned with each other, the chain link (11) having a cross-web (22) serving to hold together its side walls (30) and the side walls (30) each having a separate bearing hole (19) for the two bearing pins (23) of the chain link (11) adjacent to these bearing holes (19), which bearing pins (23) serve for the rotational mounting of the chain link (11) adjacent to them, characterized in that the chain link (11) is bent from a single-piece plane punched part (13), made of sheet metal, the regions of which forming the side walls (30) are bent away with respect to the cross-web (22) and the side walls (30) have the two bearing holes (19) in one of their longitudinal end regions and in their other longitudinal end regions the two bearing pins (23) are bent away from them.

2. Articulated chain which has single-piece chain links (11) joined together in an articulated manner, the chain link having side walls (30) which are arranged at a lateral distance from each other and extend in the longitudinal direction of the articulated chain and at one longitudinal end region of which a bearing pin (23) is arranged in each case, which bearing pins are mounted in bearing holes (19) of the chain link (11) adjacent to them, which holes are arranged at a distance from each other and are aligned with each other, the chain link (11) having a cross-web (22) serving to hold together its side walls (30) and the side walls (30) each having a separate bearing hole (19) for the two bearing pins (23) of the chain link (11) adjacent to these bearing holes (19), which bearing pins (23) serve for the rotational mounting of the chain link (11) adjacent to them, characterized in that the chain link (11) has a main body (40) which is bent from a single-piece plane punched part (13), made of sheet metal, which forms the side walls (30) and the cross-web (22) and the regions of which forming the side walls (30) are bent away with respect to the cross-web (22) and the side walls (30) have the two bearing holes (19) in one of their longitudinal end regions and have the two bearing pins (23) in their other longitudinal end regions, and in that the bearing pins (23) and/or the bearing holes (19) are formed by separate pins (23) inserted into the side walls of the main body (40) or bearing bushes (26) inserted into the side walls (30).

3. Articulated chain which has chain links (11) joined together in an articulated manner, the chain link having side walls (30) which are arranged at a lateral distance from each other and extend in the longitudinal direction of the articulated chain and at one longitudinal end region of which a bearing pin (23) is arranged in each case, which bearing pins are mounted in bearing holes (19) of the chain link (11) adjacent to them, which holes are arranged at a distance from each other and are aligned with each other, the chain link (11) having a cross-web (22) serving to hold together its side walls (30) and the side walls (30) each having a separate bearing hole (19) for the two bearing pins (23) of the chain link (11) adjacent to these bearing holes (19), which bearing pins (23) serve for the rotational mounting of the chain link (11) adjacent to them, characterized in that the chain link (11) has a main body and a roller (42), the main body being bent from a single-piece plane punched part (13), made of sheet metal, which forms the side walls (30) and the cross-web (22) and the regions of which forming the side walls (30) are bent away with respect to the cross-web (22) and the side walls (30) have the two bearing holes (19) in one of their longitudinal end regions and in their other longitudinal end regions the two bearing pins (23) are bent away from them towards each other, and in that the roller (42) is rotatably mounted on at least one of the two bearing pins (23).

4. Articulated chain according to one of Claims 1, 2 or 3, characterized in that the chain link (11) has a U-shaped stirrup (20), the middle web of which forms the cross-web (22) and both legs (21) of which together with arms (14) connected to the stirrup (20) form the side walls (30), the bearing pins (23) being arranged in the free end regions of the arms (14) and the bearing holes (19) in the legs (21), preferably each arm (14) together with the associated bearing pin (23) having a hook-shaped configuration.

5. Articulated chain according to Claim 4, characterized in that the two arms (14) of the chain link (11) are arranged on the two legs (21) of the stirrup (20), preferably at about halfway along the height of these legs.

6. Articulated chain according to Claim 4, characterized in that the two arms of the chain link are braced by the cross-web (22) of the stirrup (20).

7. Articulated chain according to one of Claims 4 to 6, characterized in that the bearing holes (19) of the chain link (11) are arranged at about halfway along the height of the stirrup (20).

8. Articulated chain according to one of the preceding claims, characterized in that the two bearing pins (23) of the chain link (11) are arranged at a longitudinal distance from each other, preferably at the about the distance of the two bearing holes (19) from each other.

9. Articulated chain according to one of the preceding claims, characterized in that the two bearing pins (23) and the side walls (30) with the bearing holes (19) of the chain link (11) leave between them passages for chain wheels (12) for the purpose of engagement of the cross-web forming a driver in tooth spaces (25) of such chain wheels.

10. Articulated chain according to one of the preceding claims, characterized in that the smallest clearance distance of the side walls (30) of the chain link (11) from each other, preferably that of the legs (21) of its stirrup (20) for lateral guiding of the articulated chain on an associated chain wheel (12) is only slightly greater than the width of the region of the chain wheel (12) engaging between the side walls (30).

11. Articulated chain according to one of Claims 1, 2 or 4 to 10, characterized in that the two bearing pins (23) of the chain link (11) are directed towards each other.

12. Articulated chain according to Claim 3 or Claim 11, characterized in that the two bearing pins (23) of the chain link (11) directed towards each other are joined together by a welding spot.

13. Articulated chain according to Claim 11 or 12, characterized in that at least one bearing pin (23) of the chain link (11) also forms a driver of the chain link, which serves to engage in tooth spaces of chain wheels (12), preferably both bearing pins abutting against each other.

14. Articulated chain according to one of Claims 1, 2 or 4 to 10, characterized in that the two bearing pins (23) of the chain link are directed away from each other, preferably the smallest clearance distance of the side walls of the chain link (11) for lateral guiding of the articulated chain on a chain wheel (12) being only slightly greater than the width of the region of the chain wheel engaging between these side walls.

15. Articulated chain according to one of the preceding claims, characterized in that the width of the cross-web having a preferably approximately rectangular cross-section is considerably smaller than the length of the side walls (30) of the chain link (11), preferably the cross-web (22) of the stirrup (20) being considerably smaller than the two legs (21) of this stirrup (20).

16. Articulated chain according to one of the preceding claims, characterized in that the chain links (11) are constructed the same as each other or similar to each other.

17. Articulated chain according to one of the preceding claims, characterized in that the cross-web (22) is arranged on the chain link on the upper side.

18. Articulated chain according to one of the preceding claims, characterized in that the longitudinal axes of the bearing holes (19) of the chain link (11) are parallel to the longitudinal axes of its bearing pins (23) and that preferably the bearing play of the bearing pins (23) of the chain links (11) in the bearing holes (19) of the adjacent chain links seating them in each case and the lateral play of the side walls (30) of adjacent chain links (11) are designed for the possibility of three-dimensional travel of the articulated chain (10).

19. Articulated chain according to one of the preceding claims, characterized in that the chain link is rigid.

20. Articulated chain according to one of the preceding claims, characterized in that on the chain link, preferably on its cross-web (22), at least one carrying or operating member (50), such as, for example, a stud, hook, fork or the like, is arranged preferably integral therewith.

21. Articulated chain according to one of the preceding claims, characterized in that the two side walls (30) of the chain link (11) are firmly joined together by at least two cross-webs (22, 51) which are arranged preferably on the upper side of the chain link.

22. Articulated chain according to one of the preceding claims, characterized in that the bearing pins (23) integral with the side walls (30) of the chain link are rounded off, preferably by stamping.

23. Chain drive consisting of a chain wheel (12) and an articulated chain (10) according to one of Claim 1 to 11 or 14 to 22, characterized in that the cross-webs (22) of the chain links (11) of the articulated chain (10) are provided such that they are able to penetrate at least partially, preferably completely, into the tooth spaces (25) of the circumferential toothing of the chain wheel (12) for the purpose positively connecting the articulated chain (10) to the chain wheel (12).

24. Chain drive according to Claim 23, characterized in that the cross-webs (22) of the chain links (11) of the articulated chain (10) are constructed such that they are able to reach as far as the bottoms (27) of the tooth spaces (25) of the chain wheel (12).

**Revendications**

1. Chaîne articulée formée de maillons de chaîne (11) en une seule pièce reliés les uns aux autres de manière articulée, le maillon de chaîne ayant des parois latérales (30) distantes l'une de l'autre et s'étendant dans la direction longitudinale de la chaîne articulée, et les zones d'extrémité longitudinales du maillon comportant chaque fois un tourillon de palier (23) se logeant dans des trous de palier (19) alignés, distants l'un de l'autre dans le maillon de chaîne (11) voisin, le maillon de chaîne (11) ayant une entretoise (22) servant au maintien de ses parois latérales (30) et les parois latérales (30) présentant un trou de palier (19) particulier pour les deux tourillons de palier (23) du maillon de chaîne (11) voisin des trous de palier (19), les tourillons de palier (23) servant à l'articulation du maillon de chaîne (11) voisin, chaîne caractérisée en ce que le maillon (11) est obtenu par pliage d'une pièce estampée (13) en tôle, unique, et dont les zones qui forment les parois latérales (30) sont repliées par rapport à l'entretoise (22) et les parois latérales (30) présentent les deux trous de palier (19) dans l'une de leurs zones d'extrémité longitudinale alors que les autres zones d'extrémité longitudinales comportent les deux tourillons de palier (23) recourbés vers l'intérieur.

2. Chaîne articulée comportant des maillons de chaîne (11) reliés de manière articulée les uns aux autres, le maillon de chaîne ayant des parois latérales (30) distantes l'une de l'autre, s'étendant dans la direction longitudinale de la chaîne articulée et dont l'une des zones d'extrémité longitudinales comporte chaque fois un tourillon de palier (23) logé dans des trous de palier (19), alignés, distants l'un de l'autre et appartenant au maillon de chaîne voisin (11), le maillon de chaîne (11) ayant une entretoise (22) servant à maintenir réunies ses parois latérales (30) et les parois latérales (30) ont chaque fois un trou de palier (19) particulier pour les deux tourillons de palier (23) du maillon de chaîne (11) voisin de ces trous de palier (19), les tourillons de palier (23) servant à l'articulation du maillon de chaîne voisin (11), chaîne caractérisée en ce que le maillon de chaîne (11) comporte un corps principal (40) qui est obtenu par pliage d'une unique pièce estampée (13), plane, en tôle formant les parois latérales (30) et l'entretoise (22) et dont les zones formant les parois latérales (30) sont repliées par rapport à l'entretoise (22), les parois latérales (30) ayant au niveau de leurs zones extrémité longitudinales, les deux trous de palier (19) et leurs autres zones d'extrémité longitudinales portant les deux tourillons de palier (23), ces tourillons de palier (23) et/ou les trous de palier (19) étant formés par des tourillons (23) particuliers logés dans les parois latérales (30) du corps principal (40) ou des douilles de palier (26) logées dans les parois latérales (30).

3. Chaîne articulée formée de maillons de chaîne (11) reliés de manière articulée, le maillon de chaîne (11) présentant des parois latérales (30) distantes l'une de l'autre et s'étendant dans la direction longitudinale de la chaîne, et dont les zones d'extrémité longitudinales comportent chaque fois un tourillon de palier (23) venant se loger dans des trous de palier (19) alignés, distants l'un de l'autre sur le maillon de chaîne (11) voisin, le maillon de chaîne (11) ayant une entretoise (22) servant à maintenir ses parois latérales (30) et ces parois latérales (30) ont chaque fois un trou de palier (19) particulier pour les deux tourillons de palier (23) du maillon de chaîne (11) voisin des trous de palier (19), les tourillons de palier (23) servant à l'articulation du maillon de chaîne voisin (11), chaîne caractérisée en ce que le maillon de chaîne (11) comporte un corps principal et un galet (42), le corps principal étant obtenu par pliage d'une pièce estampée (13), plane, en un seul morceau, qui forme les parois latérales (30) et l'entretoise (22) et dont les zones qui forment les parois latérales (30) sont repliées par rapport à l'entretoise (22) et les parois latérales ont au niveau de leurs zones d'extrémité longitudinales les deux trous de palier (19) et leurs autres zones d'extrémité longitudinales sont munies des tourillons de palier (23) formés par pliage l'un vers l'autre et le galet (42) est monté à rotation sur au moins l'un des deux tourillons de palier (23).

4. Chaîne articulée selon l'une des revendications 1, 2 ou 3, caractérisée en ce que le maillon de chaîne (11) comporte un étrier (20) en forme de U dont l'entretoise médiane forme l'entretoise (22) et dont les deux branches (21) avec les bras (14) reliés à l'étrier (20) forment les parois latérales (30), les zones d'extrémité libres des bras (14) comportant les tourillons de palier (23) et les branches (21) comportant les trous de palier (19), de préférence chaque bras (14) ainsi que le tourillon de palier (23) correspondant ayant une forme de crochet.

5. Chaîne articulée selon la revendication 4, caractérisée en ce que les deux bras (14) du maillon de chaîne (11) sont prévus sur les deux branches (21) de l'étrier (20), de préférence à mi-hauteur de ces branches.

6. Chaîne articulée selon la revendication 4, caractérisée en ce que les deux bras du maillon de chaîne divergent de l'entretoise (22) de l'étrier (20).

7. Chaîne articulée selon l'une des revendications 4 à 6, caractérisée en ce que les trous de palier (19) du maillon de chaîne (11) sont situés sensiblement à mi-hauteur de l'étrier (20).

8. Chaîne articulée selon l'une des revendications précédentes, caractérisée en ce que les deux tourillons de palier (23) du maillon de chaîne (11) sont distants dans la direction longitudinale de préférence de la distance des deux trous de palier (19).

9. Chaîne articulée selon l'une des revendications précédentes, caractérisée en ce que les deux tourillons de palier (23) et les parois latérales (30) et les trous de palier (19) du maillon de chaîne (11) laissent des passages pour la roue à chaîne (12), pour la pénétration de l'entretoise (22) formant un organe d'entraînement dans les intervalles de dents (25) de telles roues à chaîne.

10. Chaîne articulée selon l'une des revendications précédentes, caractérisée en ce que le plus petit intervalle libre des parois latérales (30) du maillon de chaîne (11) de préférence des branches (21) de son étrier (20) n'est que légèrement supérieur à la largeur de la zone de la roue à chaîne (12) qui vient entre les parois latérales (30) pour assurer le guidage latéral de la chaîne articulée sur la roue à chaîne (12) correspondante.

11. Chaîne articulée selon l'une des revendications 1, 2, ou 4 à 10, caractérisée en ce que les deux tourillons de palier (23) du maillon de chaîne (11) sont alignés l'un par rapport à l'autre.

12. Chaîne articulée selon la revendication 3 ou la revendication 11, caractérisée en ce que les deux tourillons de palier (23) alignés l'un sur l'autre dans le maillon de chaîne (11) sont reliés l'un à l'autre par un point de soudage.

13. Chaîne articulée selon la revendication 11 ou 12, caractérisée par au moins un tourillon de palier (23) du maillon de chaîne (11) qui forme également un organe d'entraînement pour le maillon de chaîne et qui sert à venir prendre dans les intervalles de dents des roues à chaîne (12), de préférence les deux tourillons de palier jointifs.

14. Chaîne articulée selon l'une des revendications 1, 2 ou 4 à 10, caractérisée en ce que les deux tourillons de palier (23) du maillon de chaîne (11) sont écartés l'un de l'autre et de préférence l'intervalle libre le plus faible des parois latérales du maillon de chaîne (11) servant à guider la chaîne articulée sur une roue à chaîne (12) n'est que légèrement supérieur à la largeur de la zone de la roue à chaîne venant prendre entre ces parois latérales.

15. Chaîne articulée selon l'une des revendications précédentes, caractérisée en ce que la largeur de la section de l'entretoise (22) qui est de préférence sensiblement rectangulaire est beaucoup plus faible que la longueur des parois latérales (30) du maillon de chaîne (11), de préférence l'entretoise (22) de l'étrier (20) est beaucoup plus étroite que les deux branches (21) de cet étrier (20).

16. Chaîne articulée selon l'une des revendications précédentes, caractérisée en ce que les maillons de chaîne (11) sont identiques ou analogues.

17. Chaîne articulée selon l'une des revendications précédentes, caractérisée en ce que l'entretoise (22) est prévue sur la face supérieure du maillon de chaîne.

18. Chaîne articulée selon l'une des revendications précédentes, caractérisée en ce que les axes longitudinaux des trous de palier (19) du maillon de chaîne (11) sont parallèles aux axes longitudinaux des tourillons de palier (23) et de préférence le jeu de paliers des tourillons de palier (23) des maillons de chaîne (11) dans les trous de palier (19) qui les reçoivent et appartiennent au maillon de chaîne voisin ainsi que le jeu latéral des parois latérales (30) du maillon de chaîne (11) voisin sont dimensionnés pour permettre un fonctionnement tridimensionnel de la chaîne articulée (10).

19. Chaîne articulée selon l'une des revendications précédentes, caractérisée en ce que le maillon de chaîne est rigide.

20. Chaîne articulée selon l'une des revendications précédentes, caractérisée en ce que le maillon de chaîne comporte de préférence sur son entretoise (22) au moins un organe de support ou de travail (50) ainsi que par exemple une tige, un crochet, une fourche ou analogue réalisés de préférence en une seule pièce avec le maillon.

21. Chaîne articulée selon l'une des revendications précédentes, caractérisée en ce que les deux parois latérales (30) du maillon (11) sont reliées solidairement par deux entretoises (22, 51) qui sont de préférence situées du côté de la face supérieure du maillon de chaîne.

22. Chaîne articulée selon l'une des revendications précédentes, caractérisée en ce que les tourillons de palier (23) qui forment une seule pièce avec les parois latérales (30) du maillon de chaîne sont arrondis de préférence par matriçage.

23. Transmission à chaîne formée d'une roue à chaîne (12) et d'une chaîne articulée (10) selon l'une des revendications 1 à 11 ou 14 à 22, caractérisée en ce que les entretoises (22) des maillons (11) de la chaîne articulée (10) sont telles qu'elles puissent pénétrer au moins partiellement et de préférence totalement dans les intervalles de dents (25) de la denture périphérique de la roue à chaîne (12) pour réaliser une liaison par la forme de la chaîne articulée (10) avec la roue à chaîne (12).

24. Transmission à chaîne selon la revendication 23, caractérisée en ce que les entretoises (22) des maillons de chaîne (11) de la chaîne articulée (10) sont conçues pour arriver jusqu'au fond (27) des intervalles de dents (25) de la roue à chaîne (12).

FIG.1

FIG.2

FIG.6

FIG.3

FIG.4

FIG.5

FIG.7

FIG.3A

FIG.8

FIG.10

EP 0 202 644 B1

FIG.9

FIG.11

FIG.12